# EUROPEAN PATENT APPLICATION

(11) **EP 4 518 075 A2**
(43) Date of publication of application: **05.03.2025**
(21) Application number: 24195801.6
(22) Date of filing: 22.08.2024
(51) Int. Cl.: H02J 3/32, H02J 7/00, H02J 13/00

(54) **VIRTUAL POWER PLANT CONFIGURATION**

(30) Priority: 29.08.2023 FI 20235959
(71) Applicant: Nokia Solutions and Networks Oy, 02610 Espoo (FI)
(72) Inventor: HÄMÄLÄINEN, Seppo Olavi, 00250 Helsinki (FI); BATSLEER, Claudine, 9630 Zwalm (BE); SALMELA, Olli Pekka, 00200 Helsinki (FI)
(74) Representative: Nokia EPO representatives

(57) **Abstract**

Disclosed is a method comprising configuring at least one of: a virtual power plant controller application for operating one or more batteries of one or more base stations as a virtual power plant, the one or more base stations for supporting the virtual power plant controller application, or one or more power systems of the one or more base stations for supporting the virtual power plant controller application.

## Description

### FIELD

The following example embodiments relate to wireless communication and to virtual power plants.

### BACKGROUND

A virtual power plant is a distributed power plant that aggregates the capacities of distributed energy resources to provide reliable and flexible electricity supply and management.

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to: configure at least one of: a virtual power plant controller application for operating one or more batteries of one or more base stations as a virtual power plant, the one or more base stations for supporting the virtual power plant controller application, or one or more power systems of the one or more base stations for supporting the virtual power plant controller application.

According to another aspect, there is provided an apparatus comprising: means for configuring at least one of: a virtual power plant controller application for operating one or more batteries of one or more base stations as a virtual power plant, the one or more base stations for supporting the virtual power plant controller application, or one or more power systems of the one or more base stations for supporting the virtual power plant controller application.

According to another aspect, there is provided a method comprising: configuring at least one of: a virtual power plant controller application for operating one or more batteries of one or more base stations as a virtual power plant, the one or more base stations for supporting the virtual power plant controller application, or one or more power systems of the one or more base stations for supporting the virtual power plant controller application.

According to another aspect, there is provided a computer program comprising instructions which, when executed by an apparatus, cause the apparatus to perform at least the following: configuring at least one of: a virtual power plant controller application for operating one or more batteries of one or more base stations as a virtual power plant, the one or more base stations for supporting the virtual power plant controller application, or one or more power systems of the one or more base stations for supporting the virtual power plant controller application.

According to another aspect, there is provided a computer readable medium comprising program instructions which, when executed by an apparatus, cause the apparatus to perform at least the following: configuring at least one of: a virtual power plant controller application for operating one or more batteries of one or more base stations as a virtual power plant, the one or more base stations for supporting the virtual power plant controller application, or one or more power systems of the one or more base stations for supporting the virtual power plant controller application.

According to another aspect, there is provided a non-transitory computer readable medium comprising program instructions which, when executed by an apparatus, cause the apparatus to perform at least the following: configuring at least one of: a virtual power plant controller application for operating one or more batteries of one or more base stations as a virtual power plant, the one or more base stations for supporting the virtual power plant controller application, or one or more power systems of the one or more base stations for supporting the virtual power plant controller application.

### LIST OF DRAWINGS

In the following, various example embodiments will be described in greater detail with reference to the accompanying drawings, in which
FIG. 1 illustrates an example of a wireless communication network;
FIG. 2 illustrates an example of a system;
FIG. 3 illustrates a signal flow diagram;
FIG. 4 illustrates a signal flow diagram;
FIG. 5 illustrates a signal flow diagram;
FIG. 6 illustrates a signal flow diagram;
FIG. 7 illustrates a signal flow diagram;
FIG. 8 illustrates a signal flow diagram;
FIG. 9 illustrates a flow chart;
FIG. 10 illustrates a flow chart;
FIG. 11 illustrates a flow chart; and
FIG. 12 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies (RATs): Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

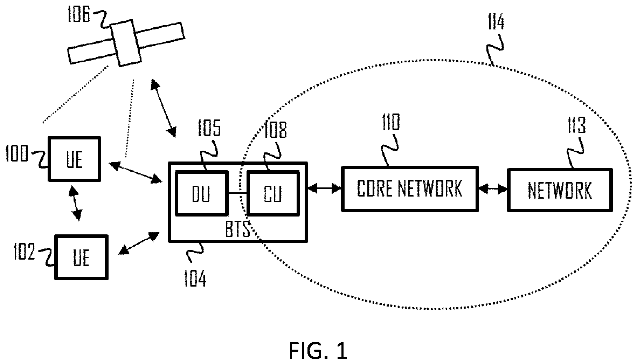

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the embodiments described herein to other wireless communication networks provided with necessary properties.

The example wireless communication network shown in FIG. 1 includes an access network, such as a radio access network (RAN), and a core network 110.

FIG. 1 shows user equipment (UE) 100, 102 configured to be in a wireless connection on one or more communication channels in a radio cell with an access node (AN) 104 of an access network. The AN 104 may be an evolved NodeB (abbreviated as eNB or eNodeB), or a next generation evolved NodeB (abbreviated as ng-eNB), or a next generation NodeB (abbreviated as gNB or gNodeB), providing the radio cell. The wireless connection (e.g., radio link) from a UE to the access node 104 may be called uplink (UL) or reverse link, and the wireless connection (e.g., radio link) from the access node to the UE may be called downlink (DL) or forward link. UE 100 may also communicate directly with UE 102, and vice versa, via a wireless connection generally referred to as a sidelink (SL). It should be appreciated that the access node 104 or its functionalities may be implemented by using any node, host, server or access point etc. entity suitable for providing such functionalities.

The access network may comprise more than one access node, in which case the access nodes may also be configured to communicate with one another over links, wired or wireless. These links between access nodes may be used for sending and receiving control plane signaling and also for routing data from one access node to another access node.

The access node may comprise a computing device configured to control the radio resources of the access node. The access node may also be referred to as a base station, a base transceiver station (BTS), an access point, a cell site, a radio access node or any other type of node capable of being in a wireless connection with a UE (e.g., UEs 100, 102). The access node may include or be coupled to transceivers. From the transceivers of the access node, a connection may be provided to an antenna unit that establishes bi-directional radio links to UEs 100, 102. The antenna unit may comprise an antenna or antenna element, or a plurality of antennas or antenna elements.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and a mobility management entity (MME). The 5GC may comprise network functions, such as a user plane function (UPF), an access and mobility management function (AMF), and a location management function (LMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device just to mention but a few names. The UE may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or any computing device comprising a wireless modem integrated in a vehicle.

It should be appreciated that a UE may also be a nearly exclusive uplink-only device, of which an example may be a camera or video camera loading images or video clips to a network. A UE may also be a device having capability to operate in an Internet of Things (IoT) network, which is a scenario in which objects may be provided with the ability to transfer data over a network without requiring human-to-human or human-to-computer interaction. The UE may also utilize cloud. In some applications, the computation may be carried out in the cloud or in another UE.

The wireless communication network may also be able to support the usage of cloud services, for example at least part of core network operations may be carried out as a cloud service (this is depicted in FIG. 1 by "cloud" 114). The wireless communication network may also comprise a central control entity, or the like, providing facilities for wireless communication networks of different operators to cooperate for example in spectrum sharing.

5G enables using multiple input - multiple output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine type applications, such as (massive) machine-type communications (mMTC), including vehicular safety, different sensors and real-time control.

In 5G wireless communication networks, access nodes and/or UEs may have multiple radio interfaces, namely below 6GHz, cmWave and mmWave, and also being integrable with existing legacy radio access technologies, such as the LTE. Integration with the LTE may be implemented, for example, as a system, where macro coverage may be provided by the LTE, and 5G radio interface access may come from small cells by aggregation to the LTE. In other words, a 5G wireless communication network may support both inter-RAT operability (such as LTE-5G) and inter-RI operability (inter-radio interface operability, such as below 6GHz - cmWave - mmWave). One of the concepts considered to be used in 5G wireless communication networks may be network slicing, in which multiple independent and dedicated virtual sub-networks (network instances) may be created within the substantially same infrastructure to run services that have different requirements on latency, reliability, throughput and mobility.

In some example embodiments, an access node (e.g., access node 104) may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node. The DU 105 may be a logical node hosting radio link control (RLC), medium access control (MAC) and/or physical (PHY) layers of the NR protocol stack for the access node. The operations of the DU may be at least partly controlled by the CU. It should also be understood that the distribution of functions between DU 105 and CU 108 may vary depending on implementation. The CU may comprise a control plane (CU-CP), which may be a logical node hosting the RRC and the control plane part of the PDCP protocol of the NR protocol stack for the access node. The CU may further comprise a user plane (CU-UP), which may be a logical node hosting the user plane part of the PDCP protocol and the SDAP protocol of the CU for the access node.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the access network (e.g., RAN) by utilizing network function virtualization (NFV) and software defined networking (SDN). Using edge cloud may mean access node operations to be carried out, at least partly, in a computing system operationally coupled to a remote radio head (RRH) or a radio unit (RU) of an access node. It is also possible that access node operations may be performed on a distributed computing system or a cloud computing system located at the access node. Application of cloud RAN architecture enables RAN real-time functions being carried out at the access network (e.g., in a DU 105) and non-real-time functions being carried out in a centralized manner (e.g., in a CU 108).

It should also be understood that the distribution of functions between core network operations and access node operations may differ in future wireless communication networks compared to that of the LTE or 5G, or even be non-existent. Some other technology advancements that may be used include big data and all-IP, which may change the way wireless communication networks are being constructed and managed. 5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network, enabling more extensive network coverage. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). A given satellite 106 in the mega-constellation may cover several satellite-enabled network entities that create on-ground cells. The on-ground cells may be created through an on-ground relay access node or by an access node 104 located on-ground or in a satellite.

It is obvious for a person skilled in the art that the access node 104 depicted in FIG. 1 is just an example of a part of an access network (e.g., a radio access network) and in practice, the access network may comprise a plurality of access nodes, the UEs 100, 102 may have access to a plurality of radio cells, and the access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of an access network (e.g., a radio access network), a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of access networks, the concept of "plug-and-play" access nodes may be introduced. An access network which may be able to use "plug-and-play" access nodes, may include, in addition to Home eNodeBs or Home gNodeBs, a Home Node B gateway, or HNB-GW (not shown in FIG. 1). An HNB-GW, which may be installed within an operator's access network, may aggregate traffic from a large number of Home eNodeBs or Home gNodeBs back to a core network of the operator.

Some example embodiments relate to a concept called virtual power plant (VPP). A VPP is a distributed power plant that aggregates the capacities of distributed energy resources (DERs), such as back-up batteries of base stations 104, to provide reliable and flexible electricity supply and management.

VPP may involve active participation in energy balancing markets, such as fast frequency reserve (FFR) and frequency containment reserve (FCR) markets, that a transmission system operator (TSO) has established in order to support the stability of a power grid. The power grid may also be referred to as an electricity grid.

Whereas load shifting is trying to optimize the cost of electricity, VPP aims to provide the TSO with an additional power capacity option that can be used in balancing the electricity supply and demand of the power grid. If there is an imbalance, the power grid frequency tends to differ from the nominal value (e.g., 50 or 60 hertz). In the worst case, an imbalance in the power grid may result in permanent damage to the power-generating equipment.

To balance the power grid, it is possible to provide extra power to the power grid by, for example, starting some reserve power plants. It is also possible to reduce the power production in case overproduction is taking place. However, there is usually some delay associated with these actions. The idea of VPP is to create a marketplace, where for a short duration (e.g., until the actual reserve power plants start producing power), some external energy resources, such as base station batteries, are used so that the power grid frequency is restored to its nominal value instantly or at least almost instantly. For this behavior, the TSO may compensate the external parties who own these external energy resources.

While a base station 104 of a wireless communication network may use the power grid as its main power source, the base station 104 may also comprise one or more batteries as a back-up power source that may be used during power outages, for example. The back-up batteries of one or more base stations 104 may be organized as a virtual power plant that can be operated as a separate entity or integrated to a VPP of a TSO. Such a scheme may also be referred to as a radio network virtual power plant herein. As a non-limiting example, the back-up battery capacity of a single base station may be approximately 400 ampere-hours (Ah) at 48 volts (V). Thus, assuming for example 10 million base stations globally, the back-up battery capacity of these base stations would be approximately 100 gigawatt hours (GWh) in total.

When discharging a battery of a base station 104, the discharged energy can be used to operate the base station (i.e., using the battery as a power source instead of the power grid). Alternatively, the discharged energy can be provided back to the power grid, if the base station's power system comprises a power supply with an inverter. For example, the battery of the base station may be charged from the power grid at night (during lower energy demand), and then discharged during daytime (when energy demand is higher). As another example, the discharging may be started when electricity supply and demand are not matching, as indicated by the measured frequency of the power grid. The frequency of the power grid may be lower when energy demand is high compared to supply, and the frequency may be higher when energy demand is low compared to supply. The discharging may be done when the base station is operating in a normal state, i.e., when no alarms are triggered that would prevent the discharge.

Alternatively, the battery of one base station may be discharged to a battery of another base station or to operate the other base station. For example, during daytime (during higher energy demand) energy may be transferred from a "residential" base station to a "business center" base station. On the other hand, during the night (during lower energy demand), energy may be transferred from the "business center" base station to the "residential" base station. In this case, the transfer may be a battery-to-battery transfer in direct current (DC).

However, the amount of discharged energy may need to be limited, so that the remaining battery level meets regulatory requirements. For example, regulatory requirements may require that the base station 104 is able to operate for at least three hours on battery power (e.g., in case of a power outage). It should be noted that the specific amount of time in the regulatory requirements may vary in different geographical areas or countries. As the regulatory requirements for the minimum time for battery operation may vary based on geographical area, a location-based service may be used to determine the needed action.

The sufficient battery level to meet the regulatory requirements may be determined based on the historical information of the base station 104, for example regarding its data traffic (e.g., at different times of the day, days of the week, holidays, events, etc.). The data traffic history of the base station may be collected by a network management system (NMS), or near-real-time RAN intelligent controller (near-RT RIC), or other network element or application in the operator's network.

The NMS is a server that uses FCAPS (fault, configuration, accounting, performance and security) information to manage a data network. The network management system may also be referred to as a network management station or network management tools. In addition to network key performance indicators (KPIs), the decision may involve other KPIs, such as measurements for the power consumption of the base station 104. When discharging energy from the batteries to the power grid, the time to recharge the batteries may also be taken into account.

The decision-making architecture for VPP use may be centralized (e.g., NMS or near-RT RIC provides charging or discharging instructions to the base station 104), distributed (e.g., the base station 104 itself or its battery control unit makes the decisions independently) or based on a hybrid model (e.g., the NMS and the base station 104 may both be involved in the decision-making).

The decision-making entity (e.g., NMS) may collect information about electricity price, battery levels, data traffic estimates, alarms, configurations and so on, and based on them decides the best time when to use batteries to operate the base station 104 or another base station or to discharge to the power grid, or when to charge the batteries. When forecasting the best time and duration for the above actions, other sources such as event calendars, weather forecast, and so on, may also be used. This data may be available from the internet, for example. The decision-making entity may also take the power grid status into account. The power grid status may be received from the power grid, or the base station 104 may measure the status from frequency measurements of the power grid.

VPP may involve a day-ahead bidding market, where external approved power suppliers and/or consumers are telling the price at which they are willing to act, when needed to either reduce their consumption or to increase it. As mentioned above, it is also possible to inject power from the base station batteries to the power grid, if the base station power system comprises a power supply with an inverter. If and when the need for VPP occurs, the TSO signals the bidder (provided that an agreement has been reached between the bidder and the TSO) that now is the time to act.

For example, in case the energy demand exceeds the supply in the power grid, the communications system provider (CSP) may off-load its base stations from the power grid, i.e., switch the base stations to temporarily operate on back-up battery power instead of drawing power from the power grid. This, in turn, helps to balance the power grid.

However, if there is a situation, where there is an excess amount of power generation, the possibility to increase the power consumption may be somewhat limited in case of base stations. One potential way to do that is to start charging the batteries in addition to running the base stations with grid power.

FFR requires fast reaction times (e.g., 0.7 to 1.3 seconds), and the duration of the action may be short (e.g., up to 30 seconds). FCR consists of two markets: FCR-D (D for disturbance) and FCR-N (N for normal). FCR-D requires relatively fast reaction times (e.g., 5 seconds), whereas for FCR-N a slower reaction time (e.g., 3 minutes) may be acceptable. In both FCR-N and FCR-D, the maximum operation time (i.e., duration of the action) may be longer than FFR (e.g., 30 minutes in FCR-N and FCR-D).

In order to qualify for the marketplace, there may be some minimum power capacity requirements. For example, for FFR and FCR-D, 1 megawatt (MW) of power capacity may be required. For FCR-N, 100 kilowatts (kW) may be sufficient in order to meet the TSO's needs. These example requirements originate from the Fingrid guideline, but similar guidelines may be associated with other TSOs as well. To meet these requirements, an aggregation of multiple base station back-up battery resources may be needed, since the power consumption of a single base station may be in the range of just 2-5 kW, which alone may not meet the minimum power capacity requirement.

Whereas VPP is about a bidding market, where a TSO is providing compensation for a short duration of off-loading base stations from the power grid to balance the energy supply and demand in the power grid, load shifting is about making use of electricity price fluctuation. The idea of load shifting is quite straightforward: charge the batteries when the electricity price is low, and off-load from the power grid by using the battery power when the price is high. In case of VPP, the CSP needs an aggregation platform and to participate in the auction market set up by the TSO. However, load shifting is a simpler approach, where there is no need for aggregation or TSO involvement. For load shifting, the CSPs themselves can decide and act, when the advantages in the energy market in terms of electricity price fluctuation are visible. For example, load shifting may be implemented by charging batteries at night when the electricity price is usually lower, and discharging the batteries during daytime when the electricity price is usually higher.

The technological development in battery chemistry has resulted in moving from lead-acid batteries to lithium-ion (Li-ion) batteries, which have a much higher energy density compared to lead-acid batteries. Lithium-ion batteries are also beneficial due to their capability to handle cyclic loading. The same applies also in load shifting use. Lead-acid batteries may not be as suitable as Li-ion batteries for load shifting use, as the performance of lead-acid batteries tends to deteriorate quickly under cyclic loading.

However, in case of VPP, the discharge times may be relatively short (e.g., in the case of FFR, where the maximum discharge time may be just 30 seconds). Such a short discharge time has a negligible impact on battery lifetime. Currently, also the yearly number of FFR occurrences is relatively low (e.g., tens of occurrences per year). Therefore, FFR use is not a threat for batteries, be it either lead-acid or Li-ion. However, in case of FCR, the maximum discharge time may be 30 minutes, which may already have a negative impact both on battery durability and be a threat for the government-set minimum back-up time requirement. However, even in case of FCR, the discharge times are usually just 2-5 minutes.

For FCR, one should still be prepared for 30-minute discharge times. One option to solve this requirement is to reserve enough extra battery capacity, so that both the government regulation requirement for back-up batteries (e.g., 3 hours) and the FCR requirement of 30 minutes are simultaneously fulfilled. Another option would be to pool some extra base station resources for this purpose. For example, in this case, a first set of base stations may be off-loaded for the first 5 minutes, and if the need for off-loading continues, then another set of base stations may be offloaded for another 5 minutes after that, and so on. By doing so, the base station back-up battery dimensioning would solely depend on the government-regulated minimum capacity (possibly with some slight overhead to run the base station on battery power for an extra 5 minutes, for example). By doing so, the currently installed base station back-up batteries could be used without having to upgrade or significantly over-dimension the back-up batteries.

It is also possible for base station batteries to be over-dimensioned for VPP or load shifting purposes. The over-dimensioning means that the battery capacity is larger than normally used for base stations (without VPP or load shifting use). This gives more flexibility to use batteries for VPP or load shifting purposes.

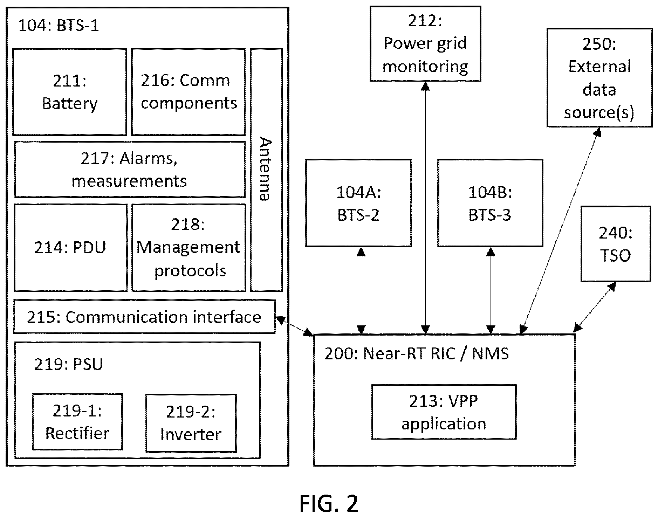

FIG. 2 illustrates an example of a virtual power plant system, to which some example embodiments may be applied.

Referring to FIG. 2, the system may comprise at least a near-real-time (near-RT) RAN intelligent controller (RIC) or a network management system (NMS) 200, one or more base stations 104, 104A, 104B, a TSO bid server 240, and one or more external data sources 250. Although three base stations 104, 104A, 104B are shown in FIG. 2, it should be noted that the number of base stations may also be different than three.

The communication between the near-RT RIC or NMS 200 and a given base station 104, 104A, 104B may occur via a communication interface 215, such as an E2 interface or any other suitable communication interface.

A given base station 104, 104A, 104B may comprise one or more batteries 211, a power supply unit (PSU) 219, a power distribution unit (PDU) 214, communication components 216, a unit 217 for alarms and measurements, and/or management protocols 218.

The one or more batteries 211 may be configured as a back-up power source of the base station 104, 104A, 104B (e.g., in case of power outages). The one or more batteries 211 may also be used for VPP purposes. For example, the one or more batteries 211 may be lithium-ion batteries, or lead-acid batteries, or any other type of batteries.

The PSU 219 may be configured to supply electrical energy from a power grid via a rectifier 219-1 to operate the base station 104, 104A, 104B and/or to charge the one or more batteries 211. The power supply unit 219 may also be referred to as a power system herein. The PSU 219 may also be configured to discharge energy from the one or more batteries 211 to the power grid via an inverter 219-2 or bi-directional rectifier 219-1. The inverter 219-2 is an electrical device or circuitry that converts direct current (DC) to alternating current (AC). The rectifier 219-1 is an electrical device or circuitry that converts AC to DC. Instead of having a separate rectifier 219-1 and inverter 219-2, a bi-directional rectifier 219-1 may be used to convert electrical power in both directions, i.e., converting AC to DC and vice versa. In other words, a bi-directional rectifier can function as both a rectifier (AC to DC conversion) and an inverter (DC to AC conversion).

The PDU 214 may be configured to distribute electrical energy to the base station 104, 104A, 104B, to or from the one or more batteries 211, and/or to or from the power grid via the PSU 219.

The PSU 219 may also be configured to provide PSU status information (e.g., power consumption information) and/or battery status information of the one or more batteries 211 to the near-RT RIC or NMS 200. The PSU 219 may be configured to communicate directly with the near-RT RIC or NMS 200, or the PSU 219 may communicate with the near-RT RIC or NMS 200 via the base station 104, 104A, 104B.

The power grid monitoring unit 212 may be configured to measure the frequency of the power grid and to provide the measurement information to the near-RT RIC or NMS 200. Alternatively, or additionally, the power grid monitoring unit 212 may be configured to receive commands or guidelines from a control system of the power grid or from another network element. The commands or guidelines may comprise, for example, one or more power grid frequency thresholds for the power grid, wherein the one or more power grid frequency thresholds indicate when to trigger the charging or discharging of the one or more batteries 211. The power grid monitoring unit 212 may be configured to indicate the one or more power grid frequency thresholds to the near-RT RIC or NMS 200 as input data for its decision-making. As another example, the commands may comprise an explicit command to start or stop discharging the one or more batteries 211 to the power grid, or to start or stop operating the base station 104, 104A, 104B with battery power (instead of drawing energy from the power grid to operate the base station).

The near-RT RIC or NMS 200 may be configured to obtain or receive input data from one or more external data sources 250, and/or from the one or more base stations 104, 104A, 104B. The one or more external data sources 250 may comprise, for example, the internet, an electricity market, and/or the control system of the power grid. The near-RT RIC or NMS 200 may also be configured to communicate with a TSO 240. For example, the near-RT RIC or NMS 200 may communicate with the TSO 240 for trading bids and reporting how much and when regulation happened. The near-RT RIC or NMS 200 may be configured to provide the received data as input data to the VPP controller application 213.

The VPP controller application 213 refers to a decision-making entity that makes decisions for VPP actions and/or load shifting actions. The VPP controller application 213 may reside, for example, in the near-RT RIC or NMS 200, or in a system module or in a dedicated server or cloud. The VPP controller application 213 is a software program that manages and coordinates the operation of multiple distributed energy resources (e.g., the one or more batteries 211) within a virtual power plant. The VPP controller application 213 facilitates the aggregation, monitoring, control, and optimization of these distributed energy resources to collectively act as a single, flexible, and responsive power generation and consumption entity.

For example, the VPP controller application 213 may be configured to control the use (e.g., charging and/or discharging) of the one or more batteries 211 of the one or more base stations 104, 104A, 104B.

The charging means that the one or more batteries 211 are charged with energy provided from the power grid via the PSU 219.

The discharging may mean that the one or more batteries 211 are used as a power source to operate the base station 104, 104A, 104B (instead of using the power grid as the power source), or that the one or more batteries 211 are discharged to the power grid via the inverter 219-2 for a certain time and energy amount. Alternatively, the discharging may mean that the one or more batteries 211 of one base station 104 are discharged to another base station 104A for a certain time and energy amount (e.g., to operate the other base station or to charge one or more batteries of the other base station).

The VPP controller application 213 may be configured to determine, based on the input data, a time and an energy amount for charging or discharging the one or more batteries 211 of the one or more base stations 104, 104A, 104B. The set of input data may comprise input data from various data sources 250. For example, the VPP controller application 213 may change the mode (charge/discharge) of the PDU 214 or PSU 219 based on the input data, boundary conditions, and/or commands from the power grid monitoring unit 212 and/or from the TSO 240. Based on the input data, the VPP controller application 213 may determine the optimal time and energy amount for charging or discharging the one or more batteries 211. The determination may be based on one or more predefined rules and/or a machine learning model or some other model.

The VPP controller application 213 may transmit an indication or command or message to the PDU 214 or PSU 219 to perform the actual charging or discharging of the one or more batteries 211 according to the determined time and energy amount.

The input data used by the VPP controller application 213 may comprise, for example, one or more battery operation policies, dynamic data (e.g., social media data, weather forecast information, etc.), electricity market information, a request for charging or discharging from the TSO 240 or the electricity market, power grid monitoring information from the power grid monitoring unit 212, network status and configuration information associated with the one or more base stations 104, 104A, 104B, historical information associated with power consumption of the one or more base stations 104, 104A, 104B, PSU status information provided by the PSU 219, and/or battery status information provided by the PDU 214 or PSU 219.

The one or more battery operation policies may comprise, for example, one or more VPP policies provided by a VPP operator, and/or a regulatory requirement for a minimum time for being able to operate the one or more base stations 104, 104A, 104B with the one or more batteries 211. As an example, a VPP policy may indicate a minimum time duration (e.g., 30 minutes) for participating in the VPP market, i.e., a minimum time duration for discharging the one or more batteries 211 to the power grid.

The power grid monitoring information may comprise, for example, one or more measured frequency values and/or one or more power grid frequency thresholds of the power grid, wherein the power grid monitoring information may be provided by the power grid monitoring unit 212.

The input data from the TSO 240 may comprise, for example, the time when to measure the power grid frequency, and the maximum delay time to react to deviations in the power grid frequency.

The VPP controller application 213 may determine one or more boundary conditions or command the one or more base stations 104, 104A, 104B to discharge in such a way that the charge level of the one or more batteries 211 remains sufficient to serve UEs as dictated by the regulatory requirements. For example, the VPP controller application 213 may predict or estimate data traffic volume, number of UEs, etc., for the time of the day or week or month, and therefore the needed battery charge level, based on data traffic forecasts or profiles and battery status information.

The network status and configuration information may comprise, for example configuration management (CM) data of the wireless communication network, fault management (FM) data of the wireless communication network, performance management (PM) data of the wireless communication network, log data of the wireless communication network, data traffic volume of the one or more base stations 104, 104A, 104B, cell load of the one or more base stations 104, 104A, 104B, a number of active UEs associated with the one or more base stations 104, 104A, 104B (e.g., number of active UEs in a cell provided by the base station 104), a health status of the one or more base stations 104, 104A, 104B, and/or historical information associated with data traffic of the one or more base stations 104, 104A, 104B. The health status of the one or more base stations 104, 104A, 104B indicates whether there are fault management alarms (service-related alarms) associated with the one or more base stations 104, 104A, 104B. For example, the discharging may not be allowed, if the health status is not good enough.

When the VPP controller application 213 is configured and commissioned, it should be connected to multiple base station power systems 219. On the other hand, when VPP is deployed, multiple power systems 219 and base stations 104, 104A, 104B should be configured to support VPP. In order to avoid manual work, it may be beneficial to automate this configuration (i.e., make it "plug and play").

This kind of plug-and-play configuration may comprise at least deploying the VPP controller application 213 and deploying the power systems 219 of the base stations 104, 104A, 104B.

Deploying the VPP controller application 213 may involve, for example: reading power system parameters and configuring the VPP controller application 213 accordingly; re-configuring the VPP controller application 213 when new power systems 219 are added or the power system configurations change; establishing connectivity to the TSO 240 (e.g., obtaining certificates for secure communication between the TSO 240 and the VPP controller application 213); and software license management.

Deploying the power systems 219 may involve, for example: establishing connectivity between the power system 219 (or batteries 211) and the VPP controller application 213; enabling a dynamic host configuration protocol (DHCP) server for automatic internet protocol (IP) address allocation; distribution of certificates for secure connectivity; configuration of power system parameters; and automatic software download to the power system 219.

However, since the VPP is a solution comprising several network elements, this will bring different levels of complexity and challenges in finding the optimal configuration for plug and play.

As a first challenge, the complexity due to the variety of different power systems 219 with different parameters may make it challenging to configure the VPP controller application 213.

As a second challenge, the complexity due to the variety of regulatory parameters changing over time may lead to high manual effort in maintaining a valid VPP configuration.

As a third challenge, it may be challenging to optimize VPP solution parameters for energy consumption and reduced carbon dioxide emissions.

As a fourth challenge, the complexity due to the variety of different power systems 219 with different parameters may make it challenging to configure the power systems 219.

As a fifth challenge, the complex configuration of base station parameters and functionality may make it challenging to match with the VPP targets.

As a sixth challenge, the selection and download of software and firmware to a new power system may currently require manual work.

As a seventh challenge, the changing VPP configurations (and base station and power system configurations) may lead to a non-functioning VPP system.

As an eighth challenge, there is complexity due to manual software license management of the VPP solution.

Some example embodiments may address the above challenges by automating the configuration of at least one of: the VPP controller application 213, one or more power systems 219, or one or more base stations 104, 104A, 104B for VPP support.

For example, when the VPP controller application 213 is deployed, its configuration may be automated through the following steps. The first step comprises reading power system and battery parameters from supplier data sheets (machine readable with version control) or databases, or tracking systems as a part of network management and/or directly from the power system 219. The second step comprises reading or receiving regulatory parameters automatically from the TSO 240 or National Regulatory Organization policy server and performing automated reconfiguration of the VPP controller application 213 accordingly. The third step comprises configuring the VPP controller application 213 based on information of energy consumption with respect to environmental parameters, such as carbon dioxide emissions.

When a new power system 219 is installed, its configuration for VPP support may be automated by automatic configuration of power system control parameters. Furthermore, the correct software for the power system may be automatically selected and downloaded to the power system 219 based on, for example, the type of the power system 219.

When a new base station 104, 104A, 104B (e.g., nodeB, eNB, or gNB) 104 with its power system 219 is installed (or a new power system 219 is installed at the cell site), the base station configuration for VPP support may be automated based on, for example, power system parameters and/or battery parameters. Configuration changes (or recommendations) may be sent to the NMS 200, from where they may be deployed to the base station 104, 104A, 104B based on NMS configuration management.

After the configuration or reconfiguration of any part of the VPP system, a self-test of the VPP system may be done to identify any errors in the system and, in case an error is detected, to roll back to a previous working parameter set and software version (e.g., parameters for the VPP controller application 213 and for different power systems 219).

The activation of the VPP solution may be based on valid software licenses. License management for VPP use cases, including software license for VPP use cases and agreements with the TSO 240, may be automated.

Some example embodiments are described below using principles and terminology of 5G radio access technology without limiting the example embodiments to 5G radio access technology, however.

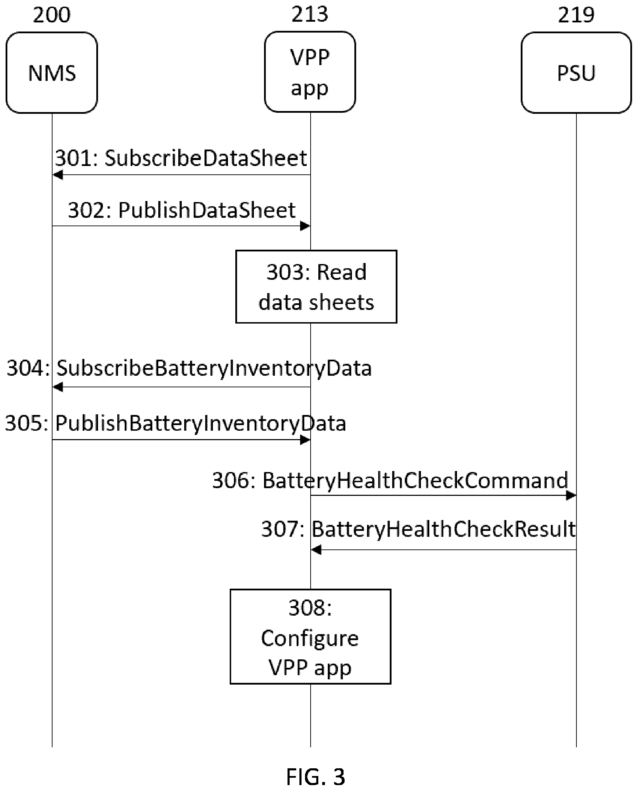

FIG. 3 illustrates a signal flow diagram according to an example embodiment for automatic configuration of the VPP controller application 213 (e.g., when the VPP controller application 213 is deployed).

Referring to FIG. 3, at 301, the VPP controller application 213 subscribes, or requests, one or more data sheets of one or more power systems 219 of one or more base stations 104, 104A, 104B, and one or more data sheets of one or more batteries 211 of the one or more base stations 104, 104A, 104B. For example, the VPP controller application 213 may subscribe or request the data sheets from the NMS 200, or from the suppliers' product databases, or directly from the one or more power systems 219.

At 302, based on the subscription or request, the VPP controller application 213 obtains or receives the one or more data sheets of the one or more power systems 219, and the one or more data sheets of the one or more batteries 211. For example, the data sheets may be automatically uploaded to the VPP controller application 213 based on the subscription.

At 303, the VPP controller application 213 reads the information from the one or more data sheets. The data sheets may be machine-readable with version control.

The one or more data sheets of the one or more power systems 219 may comprise information about at least one of: the rectifier 219-1 (e.g., per vendor and type), the inverter 219-2 (e.g., per vendor and type), or the PDU 214 (e.g., per vendor and type).

For example, the information in the one or more data sheets of the one or more power systems 219 may indicate at least one of: a software (SW) version of the rectifier 219-1, a hardware (HW) version of the rectifier 219-1, a maximum power supported by the rectifier 219-1, whether the rectifier 219-1 is bi-directional or not, a software version of the power distribution unit 214, a hardware version of the power distribution unit 214, a number of input ports and a number of output ports in the power distribution unit 214, whether the power distribution unit 214 comprises an electronic fuse or not, an output current of the power distribution unit 214, a voltage of the power distribution unit 214, a software version of the inverter 219-2, a hardware version of the inverter 219-2, a current of the inverter 219-2, a voltage of the inverter 219-2, or a synchronization accuracy of the inverter 219-2 to an alternating current frequency.

Whether a rectifier is bi-directional or not refers to its ability to convert electrical power in both directions, i.e., converting AC to DC and vice versa. In other words, a bi-directional rectifier can function as both a rectifier (AC to DC conversion) and an inverter (DC to AC conversion).

The "number of input ports" and "number of output ports" of the power distribution unit refer to the count of electrical connections available for input and output of electrical power, respectively.

An electronic fuse, often referred to as an "e-fuse," is a circuit protection device that serves a similar function to mechanical fuses but operates electronically. It is designed to protect electronic components, circuits, and devices from overcurrent conditions that could potentially damage them. Unlike mechanical fuses that use a physical element to break the circuit when current exceeds a certain threshold, electronic fuses use solid-state components like transistors or programmable devices to monitor the current flow. When the current exceeds a predetermined threshold, the electronic fuse reacts quickly by opening or breaking the circuit electronically to prevent further damage.

The output current of the power distribution unit refers to the amount of electric current that the PDU can deliver to connected devices or equipment through its output ports. In other words, it represents the maximum current that can flow from the PDU to the devices it is powering.

The voltage of the power distribution unit refers to the electrical voltage level at which the PDU operates through its output ports.

The current of the inverter refers to the amount of electric current that the inverter is capable of handling or producing.

The voltage of the inverter refers to the electrical voltage level that the inverter is designed to work with or produce.

The synchronization accuracy of the inverter to an AC frequency refers to how precisely the inverter's output waveform aligns with the frequency of the AC power grid. In electrical systems, AC power is generated and distributed at a specific frequency, such as 50 or 60 hertz, depending on the region. Inverters are devices that convert DC into AC.

The information in the one or more data sheets of the one or more batteries 211 may indicate at least one of: a maximum number of charge and discharge cycles of the one or more batteries 211, a maximum capacity of the one or more batteries 211, or a charging voltage of the one or more batteries 211.

The maximum number of charge and discharge cycles of a battery refers to the total number of times the battery can be charged and then discharged back to its empty state within its expected lifetime. In other words, it represents the number of complete charge and discharge cycles that the battery can undergo before its performance and capacity start to degrade significantly.

The maximum capacity of a battery refers to the highest amount of electrical energy that the battery can store and provide to power devices or systems. The maximum capacity may be expressed in units like ampere-hours (Ah) or watt-hours (Wh).

The charging voltage of a battery refers to the specific electrical voltage level at which a power source is applied to the battery to recharge it. When a battery is being charged, an appropriate charging voltage is applied to it to drive the flow of electrical current back into the battery, replenishing its energy stores.

At 304, the VPP controller application 213 may subscribe, or request, for example from an inventory in the NMS 200, further information associated with the one or more power systems 219 and/or the one or more batteries 211.

At 305, the VPP controller application 213 may obtain, or receive, the further information from the NMS 200 based on the subscription or request.

The further information may comprise at least one of: a location of the one or more power systems 219, or a location of the one or more batteries 211. For example, the VPP controller application 213 may read the location of recycled power systems, reused power systems, power systems for refurbishment and anti-theft of power system from the inventory in the NMS 200.

The further information may also comprise other known parameters of the one or more power systems 219 and/or the one or more batteries 211. For example, the VPP controller application 213 may read parameters, configurations, software version etc. of installed power systems from the inventory in the NMS 200.

At 306, the VPP controller application 213 transmits, to the one or more power systems 219, a command for performing a health check for at least one of: the one or more power systems 219, or the one or more batteries 211. For example, this way, an automated health-check may be done for refurbished power systems.

Alternatively, the VPP controller application 213 may transmit the one or more commands to a battery management system of the one or more batteries 211 (instead of transmitting the one or more commands to the one or more power systems 219).

At 307, based on the command, the VPP controller application 213 receives health information from the one or more power systems 219 (or from the battery management system), wherein the health information comprises at least one of: a health or state of charge (SoC) of the one or more batteries 211, or diagnostic information of the one or more power systems 219. In other words, the one or more power systems 219 report the results of the health-check to the VPP controller application 213.

The health of the one or more batteries refers to the overall condition, capacity, and performance of the one or more batteries, indicating their ability to store and deliver energy effectively over time. The SoC is a metric used to express the current energy level of a battery, for example as a percentage of its total capacity.

The diagnostic information of the one or more power systems 219 may refer to data and insights gathered through monitoring, testing, and analysis of the power system's components, performance parameters, and operating conditions, which aids in identifying potential issues, faults, or anomalies to ensure reliable operation and maintenance.

At 308, the VPP controller application 213 configures itself (e.g., via a software configuration module) for operating the one or more batteries 211 of the one or more base stations 104, 104A, 104B as a virtual power plant, wherein the VPP controller application 213 is configured based at least on the information associated with the one or more power systems, and the information associated with the one or more batteries (i.e., the information obtained at 302, 305, and 307).

The configuration of the VPP controller application 213 may indicate at least one of: a use case for VPP controller application 213, a maximum duration that the one or more base stations can be operated with the one or more batteries, a maximum number of charge and discharge cycles that the one or more base stations can be operated with the one or more batteries, a reserve capacity per power system of the one or more power systems, an estimated lifetime of the one or more batteries, or activating a communication adapter in the virtual power plant controller application for communicating with the one or more power systems.

The use case may comprise one of: fast frequency reserve (FFR), or frequency containment reserve for disturbances (FCR-D), or frequency containment reserve for normal operation (FCR-N), or automatic frequency restoration reserve (aFRR), or manual frequency restoration reserve (mFRR), or load shifting, or peak shaving.

Load shifting means shifting the electrical load or consumption from power grid supply to battery supply, or vice versa. The intention is to switch the load to batteries, when the electricity price is high (e.g., during daily peak hours).

Peak shaving means limiting power to a given maximum that is less than the rectifier maximum power (in order to limit power consumption).

For example, the configuration may comprise the configuration of, for example, FFR, FCR-D, FCR-N, aFRR, mFRR and other use case related parameters based on the health of the one or more batteries 211, and based on the product information of the one or more power systems 219 and/or the one or more batteries 211. For the use cases, the VPP controller application 213 may be configured for example with the maximum duration or maximum number of cycles that a given base station can be operated with batteries (e.g., for the FCR-D use case), reserve capacity per power system, estimated battery lifetime (e.g., based on estimated use of different use cases and the number of executed cycles).

The activation of the power system communication adapter in the VPP controller application 213 may be based on the identified type of the one or more power systems 219.

It should be noted that the example embodiment of FIG. 3 may also be applied, when the VPP controller application 213 is reconfigured, for example due to identifying a new power system version or type in the system. During reconfiguration, the VPP controller application 213 may request the newly identified power system to perform a health check and report missing information about the battery status (e.g., identity, aging, voltage, number of cycles, state of charge, duration of charging), and update the configuration of the VPP controller application 213 accordingly.

Table 1 below provides an example of the contents of the messages shown in FIG. 3.

**Table 1.**

| Message | Source | Target | Parameters |
|---|---|---|---|
| SubscribeDataSheet | VPP | NMS | Vendor, product (rectifier, distributor, battery, inverter), SW version |
| PublishDataSheet | NMS | VPP | Data sheets for the requested product |
| SubscribeBatteryInventoryData | VPP | NMS | Power system Type, SW, configurations |
| PublishBatteryInventoryData | NMS | VPP | Inventory data for the requested unit |
| BatteryHeathCheckCommand | VPP | PSU | Health check command |
| BatteryHeathCheckResult | PSU | VPP | SoC, Health of battery, etc. |

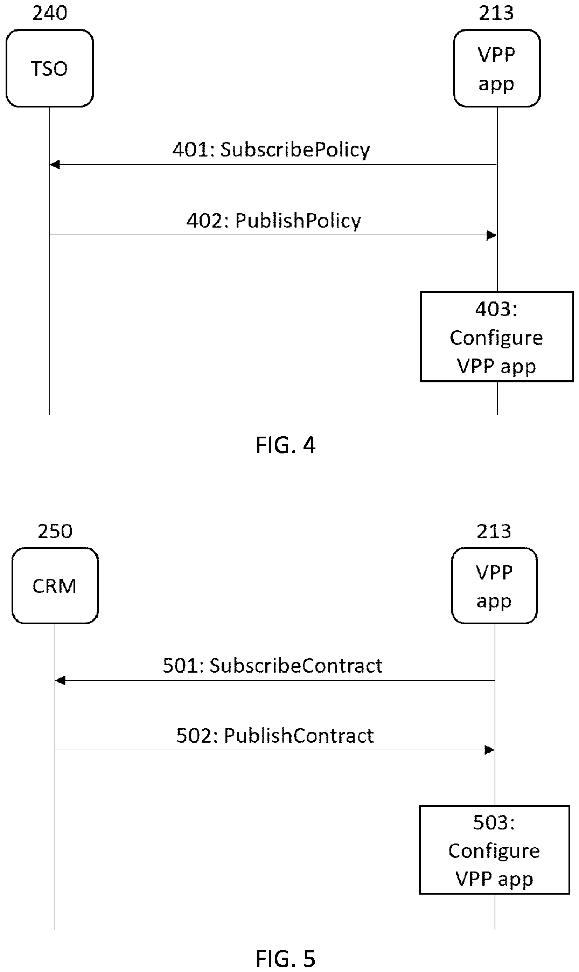

FIG. 4 illustrates a signal flow diagram according to an example embodiment for data exchange between the TSO bid server 240 (or national regulatory organization policy server) and the VPP controller application 213 for configuration or reconfiguration of the VPP controller application 213.

In this example embodiment, the VPP controller application 213 may read or receive regulatory parameters automatically from the TSO bid server 240 (or national regulatory organization policy server) and perform automated configuration of the VPP controller application 213 accordingly. For example, there may be changing requirements for power systems 219 and the VPP controller application 213 due to regulation for VPP and energy savings, and due to different specifications.

Referring to FIG. 4, at 401, the VPP controller application 213 subscribes, or requests, a set of regulatory parameters associated with the VPP controller application 213 from the TSO bid server 240 (or national regulatory organization policy server).

At 402, the VPP controller application 213 obtains or receives the one or more regulatory parameters from the TSO bid server 240 (or national regulatory organization policy server) based on the subscription or request.

For example, the set of regulatory parameters may indicate at least one of: one or more power grid frequency thresholds for triggering the VPP controller application 213, an activation time of the VPP controller application 213, a maximum activation time of the VPP controller application 213, a re-activation timer for the VPP controller application 213, or a maximum delay time between detecting a deviation in the power grid frequency and an activation start time of switching the electrical load of the one or more base stations 104, 104A, 104B from the power grid to the one or more batteries 211.

At 403, the VPP controller application 213 configures itself for operating the one or more batteries 211 of the one or more base stations 104,104A, 104B as a virtual power plant, wherein the VPP controller application 213 is configured based at least on the set of regulatory parameters.

As an example of the one or more power grid frequency thresholds, if the power grid frequency is below the nominal frequency (e.g., 50 Hz or 60 Hz), then the VPP controller application 213 may be triggered to discharge the one or more batteries 211 of the one or more base stations 104, 104A, 104B to operate the one or more base stations on battery power (i.e., to switch the electrical load to the one or more batteries), or to provide energy from the one or more batteries to the power grid.

As another example of the one or more power grid frequency thresholds, if the power grid frequency is above the nominal frequency (e.g., 50 Hz or 60 Hz), then the VPP controller application 213 may be triggered to charge the one or more batteries 211 of the one or more base stations 104, 104A, 104B by drawing energy from the power grid.

The activation time of the VPP controller application 213 may mean the duration of how long the one or more batteries 211 are to be charged or discharged.

The maximum activation time may mean the maximum duration of how long the one or more batteries 211 can be charged or discharged.

The re-activation timer may mean the time interval between activations of the VPP controller application 213. For example, the VPP controller application 213 may start the re-activation timer when it finishes charging or discharging the one or more batteries 211 (i.e., when the activation time ends), and the VPP controller application 213 then waits until the re-activation timer expires before it can charge or discharge the one or more batteries 211 again.

Table 2 below provides an example of the contents of the messages shown in FIG. 4.

**Table 2.**

| Message | Source | Target | Parameters |
|---|---|---|---|
| SubscribePolicy | VPP | TSO bid server | use case identifier (FFR, FRC-D, FCR-N, aFRR, mFRR, etc.) |
| PublishPolicy | TSO bid server | VPP | Policy parameters (triggering frequency, activation time, maximum time for full activation, re-activation timer, etc.) |

FIG. 5 illustrates a signal flow diagram according to an example embodiment for configuration or reconfiguration of the VPP controller application 213 based on carbon dioxide emissions.

Referring to FIG. 5, at 501, the VPP controller application 213 subscribes, or requests, for example from a customer relationship management (CRM) system 250 or another external data source for contracts, information of the used electricity contract associated with one or more base stations 104, 104A, 104B.

At 502, the VPP controller application 213 obtains or receives, based on the subscription or request, the information associated with the used electricity contract from the CRM 250 (or other external data source). For example, the information may indicate an energy consumption amount of the one or more base stations 104, 104A, 104B and an amount of carbon dioxide emissions associated with the energy consumption amount. The information may further indicate a cost of the carbon dioxide from the contract.

At 503, the VPP controller application 213 configures itself for operating the one or more batteries 211 of the one or more base stations 104,104A, 104B as a virtual power plant, wherein the VPP controller application 213 is configured based at least on the energy consumption amount and the amount of carbon dioxide emissions.

For example, the VPP controller application 213 may select a use case for the VPP controller application 213 based at least on the energy consumption amount and the amount of carbon dioxide emissions, wherein the use case comprises one of: fast frequency reserve (FFR), or frequency containment reserve for disturbances (FCR-D), or frequency containment reserve for normal operation, (FCR-N), or automatic frequency restoration reserve (aFRR), or manual frequency restoration reserve (mFRR), or load shifting, or peak shaving.

The use case may depend on the carbon dioxide targets that the operators have committed to. There is a direct correlation between the energy source (e.g., green energy, fossil fuels, or nuclear power plant) and the carbon dioxide emissions. VPP can help to measure and keep the carbon dioxide emissions at the commitment level by recommending when to use energy from the power grid and when to use energy from batteries.

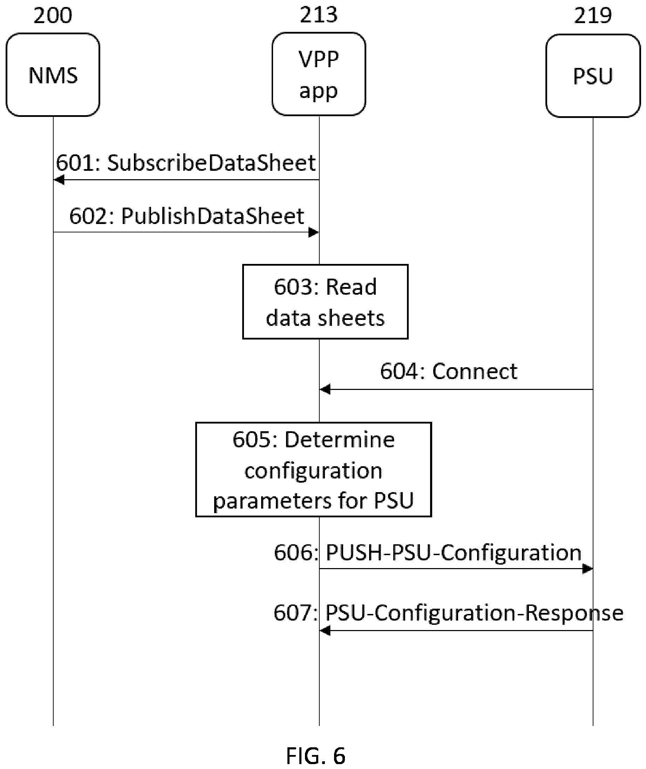

FIG. 6 illustrates a signal flow diagram according to an example embodiment for configuration of one or more power systems 219. In this example embodiment, when a new power system 219 is installed, the VPP controller application 213 dynamically selects configuration parameters for the power system 219 based on the type of the power system 219 and corresponding data sheets.

Referring to FIG. 6, at 601, the VPP controller application 213 subscribes, or requests, one or more data sheets of one or more power systems 219 of one or more base stations 104, 104A, 104B, and one or more data sheets of one or more batteries 211 of the one or more base stations 104, 104A, 104B. For example, the VPP controller application 213 may subscribe the data sheets from the NMS 200, or from the suppliers' product databases, or directly from the one or more power systems 219.

At 602, based on the subscription or request, the VPP controller application 213 obtains or receives the one or more data sheets of the one or more power systems, and the one or more data sheets of the one or more batteries 211. For example, the data sheets may be automatically uploaded to the VPP controller application 213 based on the subscription.

At 603, the VPP controller application 213 reads the information from the one or more data sheets. The data sheets may be machine-readable with version control.

The one or more data sheets of the one or more power systems 219 may comprise information aboutat least one of: the rectifier 219-1 (e.g., per vendor and type), the inverter 219-2 (e.g., per vendor and type), or the PDU 214 (e.g., per vendor and type).

For example, the information in the one or more data sheets of the one or more power systems 219 may indicate at least one of: a software (SW) version of the rectifier 219-1, a hardware (HW) version of the rectifier 219-1, a maximum power supported by the rectifier 219-1, whether the rectifier 219-1 is bi-directional or not, a software version of the power distribution unit 214, a hardware version of the power distribution unit 214, a number of input ports and a number of output ports in the power distribution unit 214, whether the power distribution unit 214 comprises an electronic fuse or not, an output current of the power distribution unit 214, a voltage of the power distribution unit 214, a software version of the inverter 219-2, a hardware version of the inverter 219-2, a current of the inverter 219-2, a voltage of the inverter 219-2, or a synchronization accuracy of the inverter 219-2 to an alternating current frequency.

The information in the one or more data sheets of the one or more batteries 211 may indicate at least one of: a maximum number of charge and discharge cycles of the one or more batteries 211, a maximum capacity of the one or more batteries 211, or a charging voltage of the one or more batteries 211.

At 604, the one or more power systems 219 connect to the VPP controller application 213 and provide information comprising at least one of: a type of the one or more power systems 219, a type of the rectifier 219-1 in the one or more power systems 219, a type of the inverter 219-2 in the one or more power systems 219, a type of the one or more batteries 211, or a type of the PDU 214.

At 605, the VPP controller application 213 determines one or more configuration parameters for the one or more power systems 219 for supporting the VPP controller application 213, wherein the determination is based on the one or more data sheets of the one or more power systems 219 and the at least one of: the type of the one or more power systems 219, the type of the rectifier 219-1 in the one or more power systems 219, the type of the inverter 219-2 in the one or more power systems 219, the type of the one or more batteries 211, or the type of the PDU 214.

For example, the VPP controller application 213 may map the type of the one or more power systems 219 to the corresponding data sheet(s) to identify or determine the appropriate power system control parameters for VPP. For example, the determination of the control parameters may be based on battery capacity for rectifier power, and the VPP use case requirements.

The one or more configuration parameters for the one or more power systems 219 may indicate at least one of: a power level, an energy level, a charge level, a charge current, a load current, a voltage, or an alarm configuration.

The power level may refer to the amount of electrical power being supplied to or consumed by the one or more base stations 104, 104A, 104B.

The energy level may refer to the amount of energy that should be stored in the one or more batteries 211. This energy level may indicate the remaining capacity of the one or more batteries 211 that can be utilized, for example, in case of power outages or interruptions to ensure continuous operation of the one or more base stations 104, 104A, 104B. Controlling the energy level may be needed to ensure that there is enough stored energy to support the base station during unexpected events and to trigger maintenance or charging when the energy level drops below a certain threshold.

The charge current may refer to the amount of electric current flowing into the one or more batteries 211. The charge current is the rate at which the one or more batteries 211 are being charged to replenish their energy reserves. For example, the charge current may be measured in amperes (A) and it indicates the speed at which the batteries are being recharged. Controlling the charge current may be needed to prevent overcharging, which can damage the batteries, and to ensure that the batteries are available to provide backup power when needed.

The load current may refer to the amount of electric current drawn by the one or more base stations 104, 104A, 104B from the power source, such as the power grid (i.e., electricity grid) or the one or more batteries 211. The load current represents the total current of all the components within the base station, including, for example, transmitters, receivers, signal processing units, cooling systems, and/or other connected devices. Controlling the load current may be needed to ensure that the power system can provide the necessary electrical energy to support the operation of the base station without overloading the power source or causing disruptions in power supply.

The voltage determines the electrical energy available to power the one or more base stations 104, 104A, 104B. The voltage level may need to be controlled within specified ranges to ensure proper functioning of the base station components and to prevent damage to the equipment. Voltage can be measured, for example, in volts (V).

The alarm configuration refers to the parameters that determine when and under what conditions the one or more power systems 219 will generate alarm notifications. The alarm configuration may be established to monitor the health and performance of the power system components, such as batteries, inverters, rectifiers, and trigger alerts in the event of anomalies, failures, or deviations from normal operating conditions. The alarm configuration helps to ensure timely detection of issues, enabling prompt corrective actions and preventive maintenance.

At 606, the VPP controller application 213 transmits the one or more configuration parameters to the one or more power systems 219.

At 607, the VPP controller application 213 may receive a response, such as an acknowledgement (ACK) or a negative acknowledgement (NACK), from the one or more power systems 219 to indicate whether the one or more configuration parameters were applied successfully to the one or more power systems 219.

Table 3 below provides an example of the contents of the messages shown in FIG. 6.

**Table 3.**

| Message | Source | Target | Parameters |
|---|---|---|---|
| SubscribeDataSheet | VPP | NMS | Vendor, product (rectifier, distributor, battery, inverter), SW version |
| PublishDataSheet | NMS | VPP | Data sheets for the requested product |
| Connect | PSU | VPP | Rectifier, battery, power distribution unit and inverter type |
| Push-PSU-Configuration | VPP | PSU | Rectifier, battery, power distribution unit and inverter parameters |
| PSU-Configuration-Response | PSU | VPP | ACK/NACK for rectifier, battery, power distribution unit and inverter parameters |

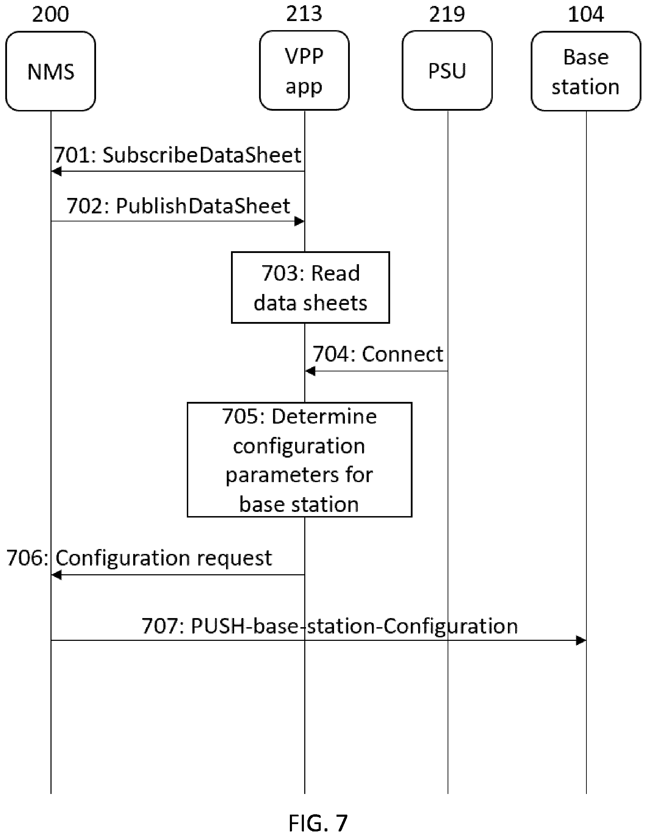

FIG. 7 illustrates a signal flow diagram according to an example embodiment for configuration of one or more base stations 104, 104A, 104B. In this example embodiment, when a new base station 104 with its power system 219 is installed, or a new power system 219 is installed for the base station 104, the base station 104 is automatically configured for VPP support. The VPP controller application 213 transmits configuration changes (or recommendations) to the NMS 200, from where they are deployed to the base station 104 based on NMS configuration management.

Referring to FIG. 7, at 701, the VPP controller application 213 subscribes, or requests, one or more data sheets of one or more power systems 219 of one or more base stations 104, 104A, 104B, and one or more data sheets of one or more batteries 211 of the one or more base stations 104, 104A, 104B. For example, the VPP controller application 213 may subscribe the data sheets from the NMS 200, or from the suppliers' product databases, or directly from the one or more power systems 219.

At 702, based on the subscription or request, the VPP controller application 213 obtains or receives the one or more data sheets of the one or more power systems, and the one or more data sheets of the one or more batteries 211. For example, the data sheets may be automatically uploaded to the VPP controller application 213 based on the subscription.

At 703, the VPP controller application 213 reads the information from the one or more data sheets. The data sheets may be machine-readable with version control.

The one or more data sheets of the one or more power systems 219 may comprise information aboutat least one of: the rectifier 219-1 (e.g., per vendor and type), the inverter 219-2 (e.g., per vendor and type), or the PDU 214 (e.g., per vendor and type).

For example, the information in the one or more data sheets of the one or more power systems 219 may indicate at least one of: a software (SW) version of the rectifier 219-1, a hardware (HW) version of the rectifier 219-1, a maximum power supported by the rectifier 219-1, whether the rectifier 219-1 is bi-directional or not, a software version of the power distribution unit 214, a hardware version of the power distribution unit 214, a number of input ports and a number of output ports in the power distribution unit 214, whether the power distribution unit 214 comprises an electronic fuse or not, an output current of the power distribution unit 214, a voltage of the power distribution unit 214, a software version of the inverter 219-2, a hardware version of the inverter 219-2, a current of the inverter 219-2, a voltage of the inverter 219-2, or a synchronization accuracy of the inverter 219-2 to an alternating current frequency.

The information in the one or more data sheets of the one or more batteries 211 may indicate at least one of: a maximum number of charge and discharge cycles of the one or more batteries 211, a maximum capacity of the one or more batteries 211, or a charging voltage of the one or more batteries 211.

At 704, the one or more power systems 219 connect to the VPP controller application 213 and provide information comprising at least one of: a type of the one or more power systems 219, a type of the rectifier 219-1 in the one or more power systems 219, a type of the inverter 219-2 in the one or more power systems 219, a type of the one or more batteries 211, a type of the PDU 214, or a VPP use case.

At 705, the VPP controller application 213 determines one or more configuration parameters for the one or more base stations 104, 104A, 104B for supporting the virtual power plant controller application, wherein the determination is based on the one or more data sheets of the one or more power systems 219 and the at least one of: the type of the one or more power systems 219, the type of the rectifier 219-1 in the one or more power systems 219, the type of the inverter 219-2 in the one or more power systems 219, the type of the one or more batteries 211, or the type of the PDU 214.

For example, the VPP controller application 213 may map the type of the one or more power systems 219 to the corresponding data sheet(s) to identify the appropriate base station control parameters for VPP.

The one or more configuration parameters for the one or more base stations 104, 104A, 104B may indicate at least one of: a maximum transmission power of a broadcast channel or a traffic channel, a maximum number of concurrent RRC connected users, one or more radio resource management timers, an algorithm for admission control, an algorithm for load control, or an algorithm for energy saving management.

The maximum transmission power indicates the upper limit of power that the base station can use to send signals on these channels. Higher power levels can increase coverage area and signal strength, but also consume more energy.

The maximum number of connected users refers to the highest count of individual UEs that can be simultaneously connected and served by the base station within its coverage area. The number of connected users may affect the power consumption of the base station. For example, as the number of connected users increases, the base station may need to increase its transmit power to maintain adequate signal strength and quality for each user.

A radio resource management (RRM) timer refers to a time-based mechanism that is used to manage and control the allocation and utilization of radio resources. Radio resources include elements like frequency channels, time slots, and other resources that are needed for transmitting and receiving wireless signals efficiently. RRM timers can affect power consumption of the base station by influencing the frequency of actions like handovers and resource allocation changes, impacting the active periods of base station components, potentially leading to increased power usage due to more frequent and intensive processing and transmission activities.

The algorithm for admission control refers to a set of rules and logic used to determine whether to accept or reject new connection requests from UEs attempting to access the network. Admission control ensures that the network's quality of service (QoS) requirements are maintained by carefully managing the number of active connections. The admission control algorithm may influence power consumption by controlling the number of active connections within the base station. Accepting too many connections may lead to resource overutilization and increased power consumption due to higher data processing and transmission activities.

The algorithm for load control refers to a set of computational instructions that dynamically manage and optimize the distribution of network resources, such as radio channels and processing capacity, to balance the traffic load across different cells and sectors, ensuring efficient network performance and quality of service. The algorithm for load control can impact power consumption by optimizing resource allocation based on real-time traffic demands. Efficient load distribution reduces the need for overloading specific cells, which can lead to decreased power usage due to more balanced usage of radio resources and reduced strain on individual components.

The algorithm for energy saving management (ESM) is a function that controls base station resources in order to save energy. For example, ESM may switch off radio layers (e.g., macro or small cell, 2G, 3G, 4G, or 5G) or dynamically mute transmitter and/or receiver paths to save energy in low load conditions. This has an impact on the power consumption of the base station.

For example, one or more of the above algorithms may be configured to cooperate together with the VPP controller application 213 (e.g., to avoid conflicts).

At 706, the VPP controller application 213 transmits, to the NMS 200, a configuration request for configuring the one or more base stations 104, 104A, 104B with the one or more configuration parameters.

At 707, the NMS 200 transmits the one or more configuration parameters to the one or more base stations 104, 104A, 104B. The one or more base stations 104, 104A, 104B may apply the one or more configuration parameters.

Table 4 below provides an example of the contents of the messages shown in FIG. 7.

**Table 4.**

| Message | Source | Target | Parameters |
|---|---|---|---|
| SubscribeDataSheet | VPP | NMS | Vendor, product (rectifier, distributor, battery, inverter), SW version |
| PublishDataSheet | NMS | VPP | Data sheets for the requested product |
| Connect | PSU | VPP | Rectifier, battery, power distribution unit and inverter type, VPP use case |
| Configuration request | VPP | NMS | Request NMS to upload identified configuration changes to base station based on PSU parameters and datasheets |
| Push-base-station-Configuration | NMS | Base station | Base station configuration matching with VPP use case type |

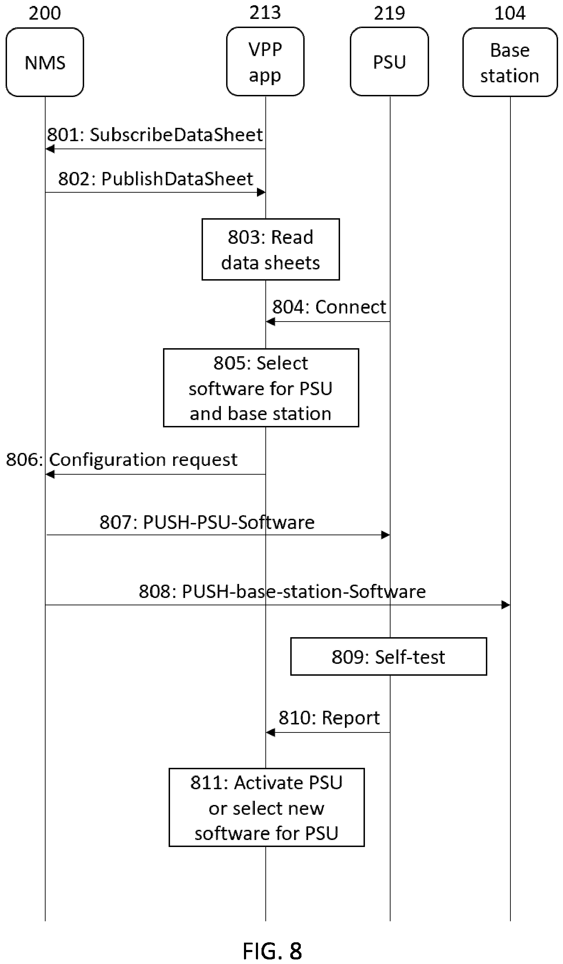

FIG. 8 illustrates a signal flow diagram according to an example embodiment for selecting and downloading software for the one or more base stations 104, 104A, 104B and their respective power system(s) 219 based on the type of the power system 219. For example, when a new power system 219 is installed, correct software for the power system 219 may be selected and downloaded automatically based on the type of the power system 219.

Referring to FIG. 8, at 801, the VPP controller application 213 subscribes, or requests, one or more data sheets of one or more power systems 219 of one or more base stations 104, 104A, 104B, and one or more data sheets of one or more batteries 211 of the one or more base stations 104, 104A, 104B. For example, the VPP controller application 213 may subscribe the data sheets from the NMS 200, or from the suppliers' product databases, or directly from the one or more power systems 219.

At 802, based on the subscription or request, the VPP controller application 213 obtains or receives the one or more data sheets of the one or more power systems, and the one or more data sheets of the one or more batteries 211. For example, the data sheets may be automatically uploaded to the VPP controller application 213 based on the subscription.

At 803, the VPP controller application 213 reads the information from the one or more data sheets. The data sheets may be machine-readable with version control.

The one or more data sheets of the one or more power systems 219 may comprise information about at least one of: the rectifier 219-1 (e.g., per vendor and type), the inverter 219-2 (e.g., per vendor and type), or the PDU 214 (e.g., per vendor and type).

For example, the information in the one or more data sheets of the one or more power systems 219 may indicate at least one of: a software (SW) version of the rectifier 219-1, a hardware (HW) version of the rectifier 219-1, a maximum power supported by the rectifier 219-1, whether the rectifier 219-1 is bi-directional or not, a software version of the power distribution unit 214, a hardware version of the power distribution unit 214, a number of input ports and a number of output ports in the power distribution unit 214, whether the power distribution unit 214 comprises an electronic fuse or not, an output current of the power distribution unit 214, a voltage of the power distribution unit 214, a software version of the inverter 219-2, a hardware version of the inverter 219-2, a current of the inverter 219-2, a voltage of the inverter 219-2, or a synchronization accuracy of the inverter 219-2 to an alternating current frequency.

The information in the one or more data sheets of the one or more batteries 211 may indicate at least one of: a maximum number of charge and discharge cycles of the one or more batteries 211, a maximum capacity of the one or more batteries 211, or a charging voltage of the one or more batteries 211.

At 804, the one or more power systems 219 connect to the VPP controller application 213 and provide information comprising at least one of: a type of the one or more power systems 219, a type of the rectifier 219-1 in the one or more power systems 219, a type of the inverter 219-2 in the one or more power systems 219, a type of the one or more batteries 211, or a type of the PDU 214.

At 805, the VPP controller application 213 selects a software for the one or more power systems 219 based on at least one of: the type of the one or more power systems 219, the one or more data sheets corresponding to the one or more power systems 219, or the virtual power plant controller application 213.

For example, the software may be selected such that it matches with the VPP use case and the type of the one or more power systems 219. The VPP controller application may check the data sheet(s) of the one or more power systems 219 for the latest software version. If the software version in the datasheet is not compatible with the VPP application 213, then the VPP controller application 213 may select an older version instead (older than the latest software version). It may also be possible to use customer-specific software (e.g., for testing with beta versions).

The VPP controller application 213 may also select a software for the one or more base stations 104, 104A, 104B. For example, the software may be selected such that it matches with the VPP use case and the type of the one or more power systems 219.

At 806, the VPP controller application 213 transmits, to the NMS 200, a configuration request for configuring the selected power system software to the one or more power systems 219, and for configuring the selected base station software to the one or more base stations 104, 104A, 104B.

At 807, the NMS 200 configures the selected power system software to the one or more power systems 219.

At 808, the NMS 200 configures the selected base station software to the one or more base stations 104, 104A, 104B.

At 809, the one or more power systems 219 may perform a self-test after being configured with the selected power system software.

At 810, the VPP controller application 213 may receive, from the one or more power systems 219 a test report indicating a test result of the self-test (i.e., a test result of the power system software after being configured at the one or more power systems 219)

At 811, based on the test report, the VPP controller application 213 performs one of: activating the one or more power systems 219, or selecting a new software for the one or more power systems 219. For example, if the test report indicates one or more errors, then the VPP controller application 213 may select a new software for the one or more power systems 219. Alternatively, if the test report does not indicate any error, then the VPP controller application 213 may activate the one or more power systems 219.

The activation of the one or more power systems 219 may mean that the VPP controller 213 transmits a command to the one or more power systems 219 to turn on or enable the power supply and operational components of the one or more base stations 104, 104A, 104B. This may include activating the various subsystems, such as radio transceivers, signal processing units, cooling systems, and other components that are necessary for the base station to function and provide wireless communication services to connected users within its coverage area.

Table 5 below provides an example of the contents of the messages shown in FIG. 8.

**Table 5.**

| Message | Source | Target | Parameters |
|---|---|---|---|
| SubscribeDataSheet | VPP | NMS | Vendor, product (rectifier, distributor, battery, inverter), SW version |
| PublishDataSheet | NMS | VPP | Data sheets for the requested product |
| Connect | PSU | VPP | Rectifier, battery, power distribution unit and inverter type |
| Configuration request | VPP | NMS | Request NMS to upload identified SW to PSU and base station according to PSU parameters and data sheets |
| Push-base-station-Software | NMS | Base station | Base station SW matching with VPP use case and rectifier, battery, power distribution unit and inverter type |
| Push-PSU- Software | NMS | PSU | PSU SW matching with VPP use case and rectifier, battery, power distribution unit and inverter type |

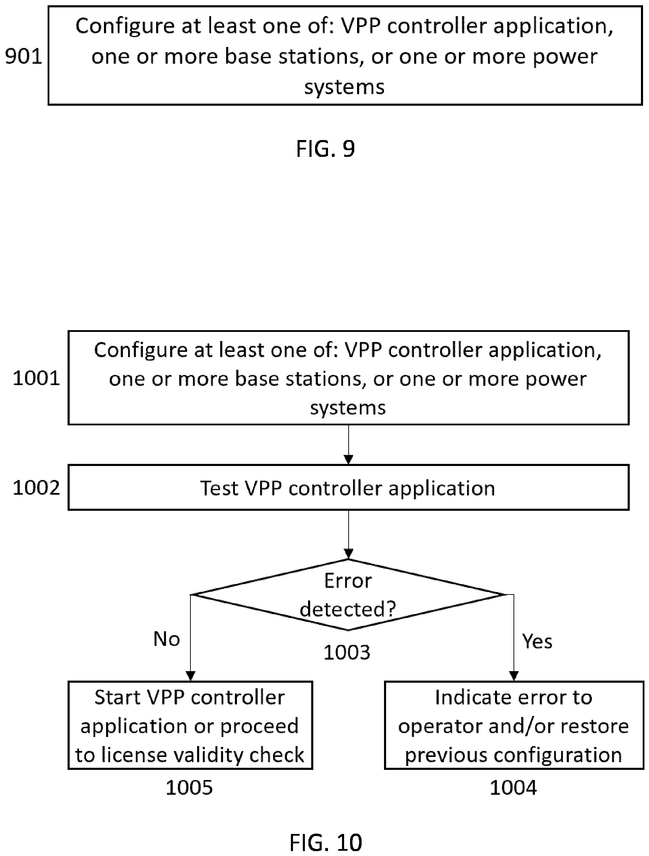

FIG. 9 illustrates a flow chart according to an example embodiment of a method performed by an apparatus 1200 or a virtual power plant controller application 213. For example, the apparatus 1200 may be, or comprise, or be comprised in, a near-real-time radio access network intelligent controller (near-RT RIC) or a network management system (NMS) 200, or a system module, or a dedicated server, or a cloud server, or any other computing device.

Referring to FIG. 9, in block 901, the apparatus or virtual power plant controller application configures at least one of: the virtual power plant controller application 213 for operating one or more batteries 211 of one or more base stations 104, 104A, 104B as a virtual power plant, the one or more base stations 104, 104A, 104B for supporting the virtual power plant controller application 213, or one or more power systems 219 of the one or more base stations 104, 104A, 104B for supporting the virtual power plant controller application 213.

For example, the apparatus or virtual power plant controller application may obtain information associated with the one or more power systems, and information associated with the one or more batteries, wherein the virtual power plant controller application may be configured based at least on the information associated with the one or more power systems, and the information associated with the one or more batteries.

The information associated with the one or more power systems may indicate at least one of: a software version of a rectifier, a hardware version of the rectifier, a maximum power supported by the rectifier, whether the rectifier is bi-directional or not, a software version of a power distribution unit, a hardware version of the power distribution unit, a number of input ports and a number of output ports in the power distribution unit, whether the power distribution unit comprises an electronic fuse or not, an output current of the power distribution unit, a voltage of the power distribution unit, a software version of an inverter, a hardware version of the inverter, a current of the inverter, a voltage of the inverter, a synchronization accuracy of the inverter to an alternating current frequency, diagnostic information of the one or more power systems, a location of the one or more power systems, or a type of the one or more power systems.

The information associated with the one or more batteries may indicate at least one of: a maximum number of charge and discharge cycles of the one or more batteries, a maximum capacity of the one or more batteries, a charging voltage of the one or more batteries, a location of the one or more batteries, or a health of the one or more batteries.

The configuration of the virtual power plant controller application may indicate at least one of: a use case for the virtual power plant controller application, a maximum duration that the one or more base stations can be operated with the one or more batteries, a maximum number of charge and discharge cycles that the one or more base stations can be operated with the one or more batteries, a reserve capacity per power system of the one or more power systems, an estimated lifetime of the one or more batteries, or activating a communication adapter in the virtual power plant controller application for communicating with the one or more power systems.

The use case may comprise one of: fast frequency reserve (FFR), or frequency containment reserve for disturbances (FCR-D), or frequency containment reserve for normal operation (FCR-N), or automatic frequency restoration reserve (aFRR), or manual frequency restoration reserve (mFRR), or load shifting, or peak shaving.

The apparatus or virtual power plant controller application may obtain a set of regulatory parameters associated with the virtual power plant controller application, wherein the virtual power plant controller application may be configured based at least on the set of regulatory parameters.

The set of regulatory parameters may indicate at least one of: one or more power grid frequency thresholds for triggering the virtual power plant controller application, an activation time of the virtual power plant controller application, a maximum time for activation of the virtual power plant controller application, a re-activation timer for the virtual power plant controller application, or a maximum delay time between detecting a deviation in a power grid frequency and switching an electrical load of the one or more base stations to the one or more batteries.

The apparatus or virtual power plant controller application may obtain information indicating an energy consumption amount of the one or more base stations and an amount of carbon dioxide emissions associated with the energy consumption amount, wherein the virtual power plant controller application may be configured based at least on the energy consumption amount and the amount of carbon dioxide emissions.

The configuration of the one or more base stations may comprise at least: determining one or more configuration parameters for the one or more base stations for supporting the virtual power plant controller application, wherein the determination is based at least on a type of the one or more power systems and one or more corresponding data sheets; and transmitting, to a network management system, a configuration request for configuring the one or more base stations with the one or more configuration parameters.

The one or more configuration parameters for the one or more base stations may indicate at least one of: a maximum transmission power of a broadcast channel or a traffic channel, a maximum number of connected users, one or more radio resource management timers, an algorithm for admission control, an algorithm for load control, or an algorithm for energy saving management.

The configuration of the one or more power systems may comprise at least: determining one or more configuration parameters for the one or more power systems for supporting the virtual power plant controller application, wherein the determination is based at least on a type of the one or more power systems and one or more corresponding data sheets; and transmitting the one or more configuration parameters to the one or more power systems.

The one or more configuration parameters for the one or more power systems may indicate at least one of: a power level, an energy level, a charge level, a charge current, a load current, a voltage, or an alarm configuration.

Alternatively, or additionally, the configuration of the one or more power systems may comprise at least: selecting a software for the one or more power systems based on at least one of: a type of the one or more power systems, one or more data sheets corresponding to the one or more power systems, or the virtual power plant controller application; and transmitting, to a network management system, a configuration request for configuring the selected software to the one or more power systems.

The apparatus or virtual power plant controller application may receive a test report indicating a test result of the software after being configured at the one or more power systems; and perform, based on the test report, one of: activating the one or more power systems, or selecting a new software for the one or more power systems.

FIG. 10 illustrates a flow chart according to an example embodiment of a method performed by an apparatus 1200 or a virtual power plant controller application 213. For example, the apparatus 1200 may be, or comprise, or be comprised in, a near-real-time radio access network intelligent controller (near-RT RIC) or a network management system (NMS) 200, or a system module, or a dedicated server, or a cloud server, or any other computing device.

The example embodiment of FIG. 10 may be executed after the configuration or reconfiguration of any part of the VPP system (e.g., after executing any of the example embodiments of FIGS. 3-9). After the configuration or reconfiguration of any part of VPP system, before activation of the VPP system, a self-test of the VPP system may be made to identify any errors in the system and, in case of an error, to roll back to a previous working setup (e.g., parameters for VPP application and for different power systems) and/or previous software version.

Referring to FIG. 10, in block 1001, the apparatus or virtual power plant controller application configures at least one of: the virtual power plant controller application 213 for operating one or more batteries 211 of one or more base stations 104, 104A, 104B as a virtual power plant, the one or more base stations 104, 104A, 104B for supporting the virtual power plant controller application 213, or one or more power systems 219 of the one or more base stations 104, 104A, 104B for supporting the virtual power plant controller application 213. For further details on the configuration, see the description of FIG. 9, for example.

In block 1002, the apparatus or virtual power plant controller application tests the virtual power plant controller application after the configuration of the at least one of: the virtual power plant controller application, the one or more base stations, or the one or more power systems. This test may be used to check if all the associated processes and interfaces are up and running and respond to test requests.

For example, the virtual power plant controller application may be tested after any changes in the VPP system, power system control parameters or base station control parameters or configuration, after a restart of the VPP controller application, or after a software update to the VPP controller application, power system(s) or base station(s). During the testing, a log file may be collected to log the test information (e.g., to log any errors that may be detected during the testing).

In block 1003, the apparatus or the virtual power plant controller application determines whether one or more errors or a performance degradation (e.g., compared to a previous configuration) were detected during the testing of the virtual power plant controller application.

In block 1004, based on detecting the one or more errors or the performance degradation (block 1003: yes), the apparatus or the virtual power plant controller application performs at least one of: indicating the one or more errors or the performance degradation to an operator for example via a graphical user interface, and/or restoring a previous configuration for the at least one of: the virtual power plant controller application, the one or more base stations, or the one or more power systems.

For example, in case of a changed configuration of the VPP controller application, the VPP controller application may be rolled back to a previous configuration, and the operator may be informed.

As another example, in case of changed configuration parameters of the one or more power systems 219, an alarm may be raised to notify the operator, and the configuration parameters may be automatically rolled back to the previous working control parameters, or a proposal may be indicated to the operator to roll back to the previous working control parameters.

As another example, in case of changed base station configuration parameters or configuration, an alarm may be raised to notify the operator, and the configuration parameters may be automatically rolled back to the previous working control parameters, or a proposal may be indicated to the operator to roll back to the previous working control parameters.

As another example, in case of an error after restarting the VPP controller application, an error ticket may be created and sent to the operator together with the log file.

As another example, in case of an error after a software update to the VPP controller application, power system(s) or base station(s), an error ticket may be created and sent to the operator together with the log file.

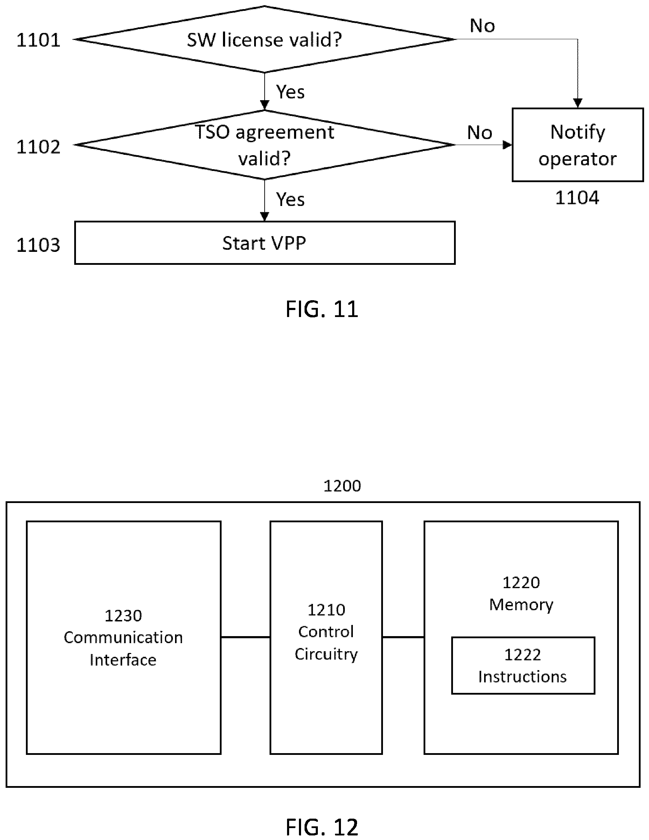

Alternatively, in block 1005, based on not detecting any errors or performance degradation (block 1003: no), the virtual power plant controller application may be started. Starting the virtual power plant controller application may refer to initiating the software program or application responsible for operating the one or more batteries of the one or more base stations as a virtual power plant. Prior to starting the virtual power plant controller application, the validity of one or more software licenses or a TSO agreement may be checked, as described below with reference to FIG. 11.

FIG. 11 illustrates a flow chart according to an example embodiment of a method performed by an apparatus 1200 or a virtual power plant controller application 213. For example, the apparatus 1200 may be, or comprise, or be comprised in, a near-real-time radio access network intelligent controller (near-RT RIC) or a network management system (NMS) 200, or a system module, or a dedicated server, or a cloud server, or any other computing device.

FIG. 11 illustrates an example embodiment for automated license management for VPP use cases, including SW license for VPP use cases and agreements with the TSO. The activation of VPP solution is based on valid licenses. The example embodiment of FIG. 11 may be executed after the configuration or reconfiguration of any part of the VPP system (e.g., after executing any of the example embodiments of FIGS. 3-10). After the configuration, when the VPP system is ready to be started, the validity of the software licenses may be checked to ensure that the software license for the VPP controller application is valid, and that there is a valid agreement with the TSO to start bidding.

Referring to FIG. 11, at 1101, the apparatus or virtual power plant controller application determines, after the configuration, prior to starting the virtual power plant controller application, whether one or more software licenses associated with the virtual power plant controller application are valid, and whether an agreement between a transmission system operator and the virtual power plant controller application is valid.

At 1102, based on determining that the one or more software licenses are valid (block 1101: yes), the apparatus or virtual power plant controller application determines, after the configuration, prior to starting the virtual power plant controller application, whether an agreement between a transmission system operator (TSO) and the virtual power plant controller application is valid. The agreement between the TSO and the virtual power plant controller application may indicate the energy balancing products or services that the VPP controller application provides to the TSO.

At 1103, based on determining that the one or more software licenses and the agreement are valid (block 1101: yes, block 1102: yes), the virtual power plant controller application is started. Starting the virtual power plant controller application may refer to initiating the software program or application responsible for operating the one or more batteries of the one or more base stations as a virtual power plant.

Alternatively, at 1104, based on determining that the one or more software licenses are not valid (block 1101: no) or that the agreement is not valid (block 1102: no), the apparatus or virtual power plant controller application may notify an operator for example via a graphical user interface. For example, in case of a missing or invalid license or TSO agreement, an alarm may be raised and a proposal may be provided to the operator to upgrade the license. The VPP system may be set to an error state (i.e., the VPP use is blocked) until the issue is resolved.

The blocks, related functions, and information exchanges (messages) described above by means of FIGS. 3-11 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 12 illustrates an example of an apparatus 1200 comprising means for performing one or more of the example embodiments described above. For example, the means may comprise the virtual power plant control application 213. The apparatus 1200 may be, or comprise, or be comprised in, a near-real-time radio access network intelligent controller (near-RT RIC) or a network management system (NMS) 200, or a system module, or a dedicated server, or a cloud server, or any other computing device.

The apparatus 1200 may comprise, for example, a circuitry or a chipset applicable for realizing one or more of the example embodiments described above. The apparatus 1200 may be an electronic device or computing system comprising one or more electronic circuitries. The apparatus 1200 may comprise a control circuitry 1210 such as at least one processor, and at least one memory 1220 storing instructions 1222 which, when executed by the at least one processor, cause the apparatus 1200 to carry out one or more of the example embodiments described above. Such instructions 1222 may, for example, include computer program code (software). The at least one processor and the at least one memory storing the instructions may provide the means for providing or causing the performance of any of the methods and/or blocks described above.

The processor is coupled to the memory 1220. The processor is configured to read and write data to and from the memory 1220. The memory 1220 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1220 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1220 or, alternatively or additionally, they may be received, by the apparatus, via an electromagnetic carrier signal and/or may be copied from a physical entity such as a computer program product. Execution of the computer readable instructions causes the apparatus 1200 to perform one or more of the functionalities described above.

The memory 1220 may be implemented using any suitable data storage technology, such as semiconductor-based memory devices, flash memory, magnetic memory devices and systems, optical memory devices and systems, fixed memory and/or removable memory.

The apparatus 1200 may further comprise or be connected to a communication interface 1230 comprising hardware and/or software for realizing communication connectivity according to one or more communication protocols. The communication interface 1230 may comprise at least one transmitter (Tx) and at least one receiver (Rx) that may be integrated to the apparatus 1200 or that the apparatus 1200 may be connected to. The communication interface 1230 may provide means for performing some of the blocks for one or more example embodiments described above. The communication interface 1230 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1230 provides the apparatus with communication capabilities to communicate in the wireless communication network. The communication interface 1230 may, for example, provide a radio, cable or fiber interface to one or more base stations 104, 104A, 104B and/or to one or more power systems 219 of the one or more base stations 104, 104A, 104B, and/or to a near-RT RIC or NMS 200.

It is to be noted that the apparatus 1200 may further comprise various components not illustrated in FIG. 12. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising at least one processor, and at least one memory storing instructions that, when executed by the at least one processor, cause the apparatus at least to:
configure at least one of:
a virtual power plant controller application for operating one or more batteries of one or more base stations as a virtual power plant,
the one or more base stations for supporting the virtual power plant controller application, or
one or more power systems of the one or more base stations for supporting the virtual power plant controller application.

2. The apparatus according to claim 1, further being caused to:
obtain information associated with the one or more power systems, and information associated with the one or more batteries,
wherein the virtual power plant controller application is configured based at least on the information associated with the one or more power systems, and the information associated with the one or more batteries.

3. The apparatus according to claim 2, wherein the information associated with the one or more power systems indicates at least one of: a software version of a rectifier, a hardware version of the rectifier, a maximum power supported by the rectifier, whether the rectifier is bi-directional or not, a software version of a power distribution unit, a hardware version of the power distribution unit, a number of input ports and a number of output ports in the power distribution unit, whether the power distribution unit comprises an electronic fuse or not, an output current of the power distribution unit, a voltage of the power distribution unit, a software version of an inverter, a hardware version of the inverter, a current of the inverter, a voltage of the inverter, a synchronization accuracy of the inverter to an alternating current frequency, diagnostic information of the one or more power systems, a location of the one or more power systems, or a type of the one or more power systems; and
wherein the information associated with the one or more batteries indicates at least one of: a maximum number of charge and discharge cycles of the one or more batteries, a maximum capacity of the one or more batteries, a charging voltage of the one or more batteries, a location of the one or more batteries, or a health of the one or more batteries.

4. The apparatus according to any of claims 2-3, wherein the configuration of the virtual power plant controller application indicates at least one of:
a use case for the virtual power plant controller application,
a maximum duration that the one or more base stations can be operated with the one or more batteries,
a maximum number of charge and discharge cycles that the one or more base stations can be operated with the one or more batteries,
a reserve capacity per power system of the one or more power systems,
an estimated lifetime of the one or more batteries, or
activating a communication adapter in the virtual power plant controller application for communicating with the one or more power systems,
wherein the use case comprises one of: fast frequency reserve, FFR, or frequency containment reserve for disturbances, FCR-D, or frequency containment reserve for normal operation, FCR-N, or automatic frequency restoration reserve, aFRR, or manual frequency restoration reserve, mFRR, or load shifting, or peak shaving.

5. The apparatus according to any preceding claim, further being caused to:
obtain a set of regulatory parameters associated with the virtual power plant controller application, wherein the virtual power plant controller application is configured based at least on the set of regulatory parameters,
wherein the set of regulatory parameters indicate at least one of: one or more power grid frequency thresholds for triggering the virtual power plant controller application, an activation time of the virtual power plant controller application, a maximum activation time of the virtual power plant controller application, a re-activation timer for the virtual power plant controller application, or a maximum delay time between detecting a deviation in a power grid frequency and switching an electrical load of the one or more base stations to the one or more batteries.

6. The apparatus according to any preceding claim, further being caused to:
obtain information indicating an energy consumption amount of the one or more base stations and an amount of carbon dioxide emissions associated with the energy consumption amount,
wherein the virtual power plant controller application is configured based at least on the energy consumption amount and the amount of carbon dioxide emissions.

7. The apparatus according to any preceding claim, wherein the configuration of the one or more power systems comprises at least:
determining one or more configuration parameters for the one or more power systems for supporting the virtual power plant controller application, wherein the determination is based at least on a type of the one or more power systems and one or more corresponding data sheets; and
transmitting the one or more configuration parameters to the one or more power systems,
wherein the one or more configuration parameters for the one or more power systems indicate at least one of: a power level, an energy level, a charge level, a charge current, a load current, a voltage, or an alarm configuration.

8. The apparatus according to any preceding claim, wherein the configuration of the one or more base stations comprises at least:
determining one or more configuration parameters for the one or more base stations for supporting the virtual power plant controller application, wherein the determination is based at least on a type of the one or more power systems and one or more corresponding data sheets; and
transmitting, to a network management system, a configuration request for configuring the one or more base stations with the one or more configuration parameters,
wherein the one or more configuration parameters for the one or more base stations indicate at least one of: a maximum transmission power of a broadcast channel or a traffic channel, a maximum number of connected users, one or more radio resource management timers, an algorithm for admission control, an algorithm for load control, or an algorithm for energy saving management.

9. The apparatus according to any preceding claim, wherein the configuration of the one or more power systems comprises at least:
selecting a software for the one or more power systems based on at least one of: a type of the one or more power systems, one or more data sheets corresponding to the one or more power systems, or the virtual power plant controller application; and
transmitting, to a network management system, a configuration request for configuring the selected software to the one or more power systems.

10. The apparatus according to claim 9, further being caused to:
receive a test report indicating a test result of the software after being configured at the one or more power systems; and
perform, based on the test report, one of: activating the one or more power systems, or selecting a new software for the one or more power systems.

11. The apparatus according to any preceding claim, further being caused to:
test the virtual power plant controller application after the configuration of the at least one of: the virtual power plant controller application, the one or more base stations, or the one or more power systems.

12. The apparatus according to claim 11, further being caused to:
detect one or more errors or a performance degradation during the testing of the virtual power plant controller application; and
based on detecting the one or more errors or the performance degradation, perform at least one of: indicate the one or more errors or the performance degradation to an operator, or restore a previous configuration for the at least one of: the virtual power plant controller application, the one or more base stations, or the one or more power systems.

13. The apparatus according to any preceding claim, further being caused to:
determine, after the configuration, prior to starting the virtual power plant controller application, whether one or more software licenses associated with the virtual power plant controller application are valid, and whether an agreement between a transmission system operator and the virtual power plant controller application is valid; and
start the virtual power plant controller application based on determining that the one or more software licenses and the agreement are valid; or
notify an operator based on determining that the one or more software licenses or the agreement is not valid.

14. A method comprising:
configuring at least one of:
a virtual power plant controller application for operating one or more batteries of one or more base stations as a virtual power plant,
the one or more base stations for supporting the virtual power plant controller application, or
one or more power systems of the one or more base stations for supporting the virtual power plant controller application.

15. A non-transitory computer readable medium comprising program instructions which, when executed by an apparatus, cause the apparatus to perform at least the following:
configuring at least one of:
a virtual power plant controller application for operating one or more batteries of one or more base stations as a virtual power plant,
the one or more base stations for supporting the virtual power plant controller application, or
one or more power systems of the one or more base stations for supporting the virtual power plant controller application.
